# EUROPÄISCHE PATENTSCHRIFT

(11) **EP 4 182 192 B1**
(45) Veröffentlichungstag und Bekanntmachung des Hinweises auf die Patenterteilung: **29.01.2025**
(21) Anmeldenummer: 21743044.6
(22) Anmeldetag: 08.07.2021
(51) Int. Cl.: B60T 7/10, B60T 7/12, B60T 8/32, B60T 13/74, B60T 17/16, F16D 65/18

(54) **ELEKTROMECHANISCHE BREMSVORRICHTUNG**
ELECTROMECHANICAL BRAKING DEVICE
DISPOSITIF DE FREINAGE ÉLECTROMÉCANIQUE

(30) Priorität: 14.07.2020 DE 102020208769
(43) Veröffentlichungstag der Anmeldung: 24.05.2023
(73) Patentinhaber: Continental Automotive Technologies GmbH, 30175 Hannover (DE)
(72) Erfinder: JUNGBECKER, Johann, 60488 Frankfurt am Main (DE); KIRCHER, Andreas, 60488 Frankfurt am Main (DE); SCHIRLING, Andreas, 60488 Frankfurt am Main (DE); SCHACK, Peter, 60488 Frankfurt am Main (DE); LINHOFF, Paul, 60488 Frankfurt am Main (DE); BESIER, Marco, 60488 Frankfurt am Main (DE); BÖHM, Jürgen, 60488 Frankfurt am Main (DE)
(74) Vertreter: Continental Corporation
(86) Internationale Anmeldenummer: PCT/DE2021/200091
(87) Internationale Veröffentlichungsnummer: WO 2022/012722

(56) Entgegenhaltungen:
- WO-A1-2005/073043
- US-A1- 2018 086 325

## Beschreibung

Die Erfindung betrifft eine elektromechanische Bremsvorrichtung nach dem Oberbegriff des Anspruchs 1.

Derartige Bremsvorrichtungen sind im Stand der Technik bekannt. Anders als bei einer klassischen hydraulischen Bremse, werden bei einer elektromechanischen Bremsvorrichtung Bremsbeläge mittels einer elektromechanischen Spannvorrichtung mit einer Kraft in Richtung des jeweiligen Reibpartners beaufschlagt, um das gewünschte Verzögerungsmoment zu erzeugen.

Eine klassische hydraulische Bremsvorrichtung zeigt beispielsweise das Dokument WO 2005/073043 A1. Neben einer hydraulisch arbeitenden Betriebsbremse wird eine elektrisch steuerbare Feststellbremsanlage vorgeschlagen, die dazu eingerichtet ist, Bremskräfte zu erzeugen und diese zu halten.

Eine weitere klassische hydraulische Bremsvorrichtung beschreibt das Dokument US 2018/0086325 A1. Die Radbremsen können hierbei sowohl hydraulisch als Betriebsbremse als auch elektromechanisch als Parkbremse betätigt werden.

Bei einer hydraulischen Bremse wird die Steuerung des erzeugten Bremsmoments über den zur Erzeugung des Bremsmoments aufgebrachten Fluiddruck in der Bremsflüssigkeit realisiert. Dies ist jedoch bei einer elektromechanischen Bremse der beschriebenen Bauart zunächst so nicht möglich.

Vielmehr werden im Stand der Technik üblicherweise andere Wege verfolgt, um die durch eine elektromechanische Bremse aufgebrachte Spannkraft zu ermitteln und mit dieser Information die Betätigung der elektromechanischen Bremse auf Grundlage einer Bremsanforderung zu steuern. Ein erster Ansatz besteht darin, die Betriebsparameter des elektromechanischen Antriebs zu überwachen, und aus den so ermittelten Größen, insbesondere des Motorstroms und der Motorposition, die aktuell anliegende Spannkraft zu ermitteln. Ein solcher Ansatz ist beispielsweise in der EP 1 141 686 B1 der Anmelderin beschrieben.

Ein zweiter bekannter Ansatz besteht darin, die in einem Bremssattel oder Betätigungsmechanik wirkenden Kräfte mittels entsprechender Kraftsensoren zu messen und so auf die aktuell wirkende Zuspannkraft zu schließen. Hierzu beschreibt beispielsweise die DE 196 40 995 C2 der Anmelderin, dass aus einer Verformung der der Zuspannvorrichtung oder eines Armes, der die Zuspannkraft abstützt, auf die ausgeübte Zuspannkraft geschlossen werden kann.

Die vorliegende Erfindung befasst sich mit der Aufgabe, ein hierzu alternatives Konzept zur Bestimmung der Zuspannkraft in einer elektromechanischen Bremsvorrichtung anzugeben, das sich insbesondere durch eine verbesserte Genauigkeit unter Einsatz günstiger Technologie auszeichnet.

Diese Aufgabe wird mit der elektromechanischen Bremsvorrichtung nach Anspruch 1 gelöst. Vorteilhafte Ausgestaltungen sind Gegenstand der abhängigen Ansprüche.

Die Erfindung betrifft eine elektromechanische Bremsvorrichtung mit einem Bremssattel und einem in dem Bremssattel entlang einer Zuspannrichtung beweglich gelagerten Druckkolben, wobei die Bremsvorrichtung eine elektromechanische Spannvorrichtung aufweist, wobei sich die Spannvorrichtung einerseits an dem Druckkolben abstützt und dazu ausgebildet ist, den Druckkolben mit einer entlang der Zuspannrichtung wirkenden Kraft zu beaufschlagen. Erfindungsgemäß ist dabei vorgesehen, dass die Bremsvorrichtung wenigstens einen hydraulisch abgeschlossenen, fluidgefüllten Hohlraum aufweist, wobei sich die Spannvorrichtung andererseits über den fluidgefüllten Hohlraum mittelbar an dem Bremssattel abstützt und wobei ein Drucksensor mit dem fluidgefüllten Hohlraum hydraulisch verbunden und dazu ausgebildet ist, den Fluiddruck innerhalb des fluidgefüllten Hohlraums zu ermitteln.

Der Erfindung liegt dabei die Überlegung zugrunde, sich die für hydraulische Bremsvorrichtungen bekannte Bestimmung der Zuspannkraft aus einem hydraulischen Druck, auch für die Bestimmung der Zuspannkraft einer elektromechanischen Bremsvorrichtung zunutze zu machen. Dies wird erfindungsgemäß dadurch realisiert, dass durch die Abstützung der Spannvorrichtung an einem fluidgefüllten Hohlraum die auf den Druckkolben der Bremsvorrichtung wirkende Zuspannkraft gleichermaßen auch auf den fluidgefüllten Hohlraum einwirkt und dabei zu einer Druckerhöhung innerhalb des Fluids führt. Der fluidgefüllte Hohlraum wirkt demnach wie en hydraulisches Druckpolster. Aus dem Fluiddruck kann dann unter Kenntnis der Geometrie der entsprechenden Elemente, also des Hohlraums und des Drucksensors, auf die wirkende Zuspannkraft geschlossen werden. Die so ermittelte Zuspannkraft kann dann wiederum einer Steuereinheit der Bremsvorrichtung zur Steuerung eines entsprechenden Spannkraftreglers zugeführt werden.

Als Fluid für den Hohlraum wird dabei bevorzugt eine umweltverträgliche und über den ganzen relevanten Temperaturbereich hydraulisch viskose Flüssigkeit verwendet.

Dabei ist die Bestimmung einer Zuspannkraft aus einem Fluiddruck an sich bereits lange bekannt und dementsprechend weit entwickelt. Folglich kann zur Implementierung des erfindungsgemäßen Ansatzes auf bekannte Technologie zurückgegriffen werden, insbesondere bezüglich der verwendeten Drucksensorik und auch der entsprechenden Regelung der Bremsvorrichtung auf Grundlage gemessener Druckwerte. Dies erlaubt eine sehr genaue Bestimmung der Zuspannkraft unter gleichzeitigem Einsatz kostengünstiger Technologie.

Unter der "Zuspannrichtung" wird dabei jene Bewegungsrichtung des Druckkolbens verstanden, welche dazu führt, dass an dem Druckkolben angeordnete Bremsbeläge mit den entsprechenden Reibpartnern in Eingriff gebracht werden. Die Bezeichnung als "Druckkolben" soll dabei nicht einschränkend in Hinsicht auf die geometrische Form des entsprechenden Elements verstanden werden. So ist ein Druckkolben im Sinne der vorliegenden Erfindung nicht zwingend kolbenförmig. Vielmehr ist als Druckkolben stets jenes Element zu verstehen, dass bei einer Betätigung der Bremsvorrichtung aus einer Ruhelage verschoben wird wobei als Folge der Verschiebung die Reibpartner der Bremsvorrichtungen Eingriff gebracht werden.

Das zuvor beschriebene Prinzip, aus einer Betrachtung eines hydraulischen Drucks auf die Zuspannkraft einer elektromechanischen Bremsvorrichtung zu schließen, ist dabei grundsätzlich auf jede Bauform einer elektromechanischen Bremsvorrichtung anwendbar, in der ein Druckkolben im Sinne der obigen Definition mittels einer Spannvorrichtung mit einer solchen Zuspannkraft beaufschlagt wird. Nach einer bevorzugten Ausführungsform weist jedoch die Spannvorrichtung eine elektromotorischen angetriebene Gewindespindel und eine Spindelmutter auf, wobei sich die Spindelmutter in Zuspannrichtung an dem Druckkolben abstützt und wobei sich die Gewindespindel über den fluidgefüllten Hohlraum entgegen der Zuspannrichtung an dem Bremssattel abstützt. Bei einer Betätigung einer solchen Bremsvorrichtung wird durch eine Rotation der Gewindespindel die Spindelmutter und mithin der Druckkolben entlang der Zuspannrichtung verschoben, bzw. mit einer Kraft entlang der Zuspannrichtung beaufschlagt. Die bei einer Beaufschlagung des Druckkolbens mit einer Zuspannkraft erzeugte Reaktionskraft wird dabei aufgrund der Abstützung der Gewindespindel an dem fluidgefüllten Hohlraum vollständig als Fluiddruck abgebildet. Somit ist eine genaue Bestimmung der Zuspannkraft aus dem ermittelten Druck in dem fluidgefüllten Hohlraum möglich. Dabei ist der beschriebene Spindeltrieb bevorzugt als reibungsarmer Kugelgewindetrieb ausgebildet.

Zur Ermittlung des in dem fluidgefüllten Hohlraum herrschenden Drucks können dabei durchaus auch mehrere Drucksensoren zum Einsatz kommen. Auf diese Weise kann eine Redundanz bzgl. der Bestimmung der Zuspannkraft der Reibungsbremse geschaffen werden, sodass auch bei einem Ausfall eines der Drucksensoren weiterhin eine zuverlässige Ermittlung des in dem fluidgefüllten Hohlraum herrschenden Drucks und eine entsprechende Regelung der Zuspannkraft der Bremsvorrichtung möglich bleibt.

Dabei ist nach einer weiteren Ausführungsform vorgesehen, dass die Spindelmutter zumindest teilweise in einer Ausnehmung innerhalb des Druckkolbens angeordnet ist. Insbesondere kann die Spindelmutter auch vollständig innerhalb des Druckkolbens angeordnet sein, sodass eine möglichst spielfreie und sichere Kraftübertragung von der Spindelmutter auf den Druckkolben erfolgen kann. Dabei erstreckt sich die Gewindespindel logischerweise ebenfalls abschnittsweise durch den Druckkolben. Um eine ausreichende Verschiebbarkeit des der Spindelmutter und mithin des Druckkolbens auf der Gewindespindel zu gewährleisten, ist bevorzugt in Zuspannrichtung hinter der Spindelmutter eine Aufnahme für die Gewindespindel ausgebildet, wobei die Tiefe der Ausnahme den maximalen Verschiebeweg der Spindelmutter mit festlegt.

Für eine einfache und gleichzeitig wirkungsvolle Abstützung der Gewindespindel an dem Hohlraum ist nach einer weiteren Ausführungsform vorgesehen, dass die Gewindespindel einen ersten Längsabschnitt mit einem ersten Durchmesser aufweist und einen an den ersten Längsabschnitt angrenzenden zweiten Längsabschnitt aufweist, wobei in dem zweiten Längsabschnitt ein Außengewinde ausgebildet ist, dessen Durchmesser größer als der erste Durchmesser ist. Nach einer weiteren Ausführungsform ist dabei ferner vorgesehen, dass auf dem ersten Längsabschnitt der Gewindespindel ein Stützring angeordnet ist, wobei der Innendurchmesser des Stützrings kleiner als der Außendurchmesser des zweiten Längsabschnitts der Gewindespindel ist, sodass sich die Gewindespindel über den Stützring entgegen der Zuspannrichtung über den fluidgefüllten Hohlraum mittelbar an dem Bremssattel abstützt.

Besonders bevorzugt ist dabei der Durchmesser des ersten Längsabschnitts der Gewindespindel und dementsprechend der Innendurchmesser des Stützrings kleiner als der Kerndurchmesser der Gewindespindel. **In** diesem Fall erfolgt die Abstützung nicht an dem Gewinde an sich, sondern an dem meist stabileren Kernbereich der Spindel. So kann insbesondere eine Beschädigung des Gewindes bei hohen Krafteinwirkungen vermieden werden.

Wie zuvor bereits ausgeführt wurde, beruht das erfindungsgemäße Konzept zur Bestimmung der Zuspannkraft darauf, dass die durch die Spannvorrichtung auf den Druckkolben bewirkte Kraft in einem fluidgefüllten Hohlraum aufgrund einer Abstützung der Spannvorrichtung an dem Hohlraum eine Druckerhöhung in der enthaltenen Flüssigkeit bewirkt. Hierzu ist es besonders vorteilhaft, wenn der Hohlraum so ausgebildet ist, dass sich das Volumen des Hohlraums bei einer Krafteinwirkung insbesondere entlang der Zuspannrichtung leicht, also mit möglichst geringem mechanischem Widerstand, verändern lässt. **In** diesem Fall wird eine Reduzierung des erzeugten Drucks dadurch, dass ein Teil der einwirkenden Kraft für eine Verformung des Hohlraums aufgewendet werden musss, reduziert und folglich die Messgenauigkeit verbessert.

**In** einer bevorzugten Ausgestaltung der Erfindung wird eine solche leichte Verformbarkeit des Hohlraums dadurch gewährleistet, dass der fluidgefüllte Hohlraum zwischen einer ersten und einer zweiten Druckhülse ausgebildet ist, wobei sich die erste Druckhülse entgegen der Zuspannrichtung an dem Bremssattel abstützt, während sich die zweite Drückhülse in Zuspannrichtung an der Spannvorrichtung, insbesondere an dem Stützring, abstützt. Die Drückhülsen sind dabei bevorzugt so in der Bremsvorrichtung angeordnet, dass sie sich entlang der Zuspannrichtung unabhängig voneinander bewegen können. Die Bezeichnung als "Hülse" ist dabei nicht beschränkend hinsichtlich der Geometrie des entsprechenden Elements zu verstehen.

Wird in dieser Anordnung durch die Spannvorrichtung eine Kraft auf den Druckkolben in Zuspannrichtung bewirkt, wirkt gleichzeitig eine entsprechende Reaktionskraft auf die zweite Druckhülse, die die zweite Druckhülse in Richtung der ersten Druckhülse treibt und folglich zu einer Komprimierung des zwischen den Druckhülsen ausgebildeten Hohlraums führt. Da der Hohlraum wiederum fluiddicht abgeschlossen ist, wird auf diese Weise die von der Spannvorrichtung bewirkte Zuspannkraft in Form eines Drucks innerhalb des Hohlraums abgebildet.

Dabei ist nach einer weiteren Ausführungsform vorgesehen, dass die erste Druckhülse an dem Bremssattel befestigt ist, sodass die erste Druckhülse relativ zu dem Bremssattel nicht verschiebbar ist. So kann vermieden werden, dass bei Beginn eines Zuspannvorgangs zunächst die erste Druckhülse so weit entgegen der Zuspannrichtung verschoben werden muss, dass sie an einem Teil des Bremssattels derart zu liegen kommt, dass eine weitere Verschiebung entgegen der Zuspannrichtung blockiert ist. Eine solche Verschiebung könnte zu Verfälschungen des gemessenen Drucks innerhalb des Hohlraums und mithin zu einer fehlerhaften Bestimmung der Zuspannkraft aus dem gemessenen Druck führen.

Nach einer weiteren Ausführungsform ist ferner vorgesehen, dass die erste Druckhülse und die zweite Druckhülse jeweils eine Öffnung aufweisen, wobei sich die Spannvorrichtung durch die Öffnung erstreckt. Bei Verwendung eines Spindeltriebs erstreckt sich dabei insbesondere die Gewindespindel durch die zentrale Öffnung. Dabei ist die jeweilige Öffnung in den Druckhülsen bevorzugt jeweils zentriert. Durch einen solchen Aufbau ist eine kompakte Integration des fluidgefüllten Hohlraums in den Aufbau der elektromechanischen Bremse möglich.

Wie zuvor bereits ausgeführt wurde, wird in der beschriebenen Ausgestaltung eines Hohlraums mittels zweier Druckhülsen eine Komprimierung des zwischen den Druckhülsen eingeschlossenen Hohlraums durch eine Relativbewegung zwischen den Druckhülsen erzielt. Hierzu ist nach einer Ausführungsform vorgesehen, dass die zweite Druckhülse entlang der Zuspannrichtung verschiebbar in der ersten Druckhülse gelagert ist. Besonders bevorzugt ist dabei die erste Druckhülse an dem Bremssattel festgelegt. Die zweite Druckhülse ist dann bevorzugt so in der ersten Druckhülse gelagert, dass sich die zweite Druckhülse ausschließlich entlang der Zuspannrichtung bewegen kann.

Hierzu ist nach einer weiteren Ausführungsform ferner vorgesehen, dass die zweite Druckhülse auf wenigstens zwei Lagerflächen an der ersten Druckhülse gleitgelagert ist, wobei im Bereich der Lagerflächen an der ersten Druckhülse und/oder der zweiten Druckhülse Dichtelemente angeordnet sind, die den zwischen den Druckhülsen ausgebildeten Hohlraum fluiddicht abdichten. Bei den Dichtelementen handelt es sich bevorzugt um Dichtungsringe, die beispielsweise in Nuten angeordnet sein können, die in der ersten und/oder dem zweiten Druckhülse im Bereich der Lagerflächen ausgebildet sind. Bevorzugt ist dabei ein erstes der Dichtelemente in oder an der ersten Druckhülse befestigt, während ein zweites der Dichtelemente in oder an der zweiten Druckhülse befestigt ist.

Nach einer weiteren Ausführungsform ist ferner vorgesehen, dass die erste und die zweite Druckhülse jeweils topfförmig ausgebildet sind, wobei die Spannvorrichtung zumindest abschnittsweise innerhalb der Topfform angeordnet ist. So kann eine sehr kompakte Ausführung der elektromechanischen Bremsvorrichtung realisiert werden, insbesondere im Hinblick auf die Ausdehnung der Bremsvorrichtung in deren Zuspannrichtung. Als "Topfform" ist damit eine insbesondere achsensymmetrische, einseitig offene Geometrie mit einer Bodenfläche und radial außen an die Bodenfläche angrenzenden, umlaufenden Seitenwänden zu verstehen. Dabei kann die Ausdehnung der Topfform in radialer Richtung größer oder kleiner als die Ausdehnung der Topfform in axialer Richtung sein.

Dabei ist nach einer bevorzugten Ausführungsform vorgesehen, dass der Drucksensor in einer Seitenwand der Topfform der ersten Druckhülse angeordnet ist. Auf diese Weise behindert die Anordnung des Drucksensors nicht die Ausgestaltung der Spannvorrichtung an sich, da der Drucksensor seitlich versetzt neben einer Betätigungsachse der Spannvorrichtung angeordnet ist.

Alternativ zu der zuvor beschriebenen Ausführungsform mit topfförmigen Druckhülsen, ist nach einer weiteren Ausführungsform vorgesehen, dass die erste Druckhülse und die zweite Druckhülse jeweils tellerförmig ausgebildet sind, wobei die Druckhülsen an ihren radialen Außenrändern und an den Rändern ihrer jeweiligen Öffnungen über Membranen miteinander verbunden sind, sodass der zwischen den Druckhülsen ausgebildete Hohlraum durch die Membranen fluiddicht abgeschlossen ist. Unter einer Tellerform ist dabei eine konkave Scheibenform zu verstehen, deren Ausdehnung in axialer Richtung kleiner ist als die Ausdehnung in radialer Richtung.

Als Membranen können dabei insbesondere Faltenbälge verwendet werden, die jeweils an einer radialen Außenkante der Tellerform und, bei einer zentrierten Öffnung innerhalb der Tellerform, wie sie zuvor beschrieben wurde, im Bereich ebendieser Öffnung angeordnet sind. Die Ausgestaltung der Druckhülsen als Tellerform hat dabei den Vorteil, dass die Druckhülsen und mithin die Anordnung zur Bestimmung der Spannkraft leicht skalierbar ist, da die Ringflächen der Tellerformen leicht an die in der entsprechenden Bremsvorrichtung auftretenden Spannkräfte anpassbar sind. Dabei können die Membranen insbesondere an den ihren Kontaktstellen zu den Druckhülsen mit den Druckhülsen verschweißt sein.

Dabei ist nach einer weiteren Ausführungsform ferner vorgesehen, dass der Drucksensor in der Tellerform der ersten Druckhülse zwischen den Membranen angeordnet ist.

Um bei einem Defekt des Drucksensors einen leichten Austausch des Drucksensors zu ermöglichen ist ferner nach einer weiteren Ausführungsform vorgesehen, dass der Drucksensor in die erste Druckhülse eingeschraubt ist.

Der von dem Drucksensor ermittelte Druck innerhalb des Hohlraums kann dabei einem Spannkraftregler der Bremsvorrichtung mittels einer bevorzugt integrierten Schnittstelle übermittelt werden. Eine Steuereinheit der Drucksensorik kann dabei auch in die Steuerung der Bremsvorrichtung integriert werden.

Im Folgenden werden bevorzugte Ausgestaltungen der Erfindung anhand der Zeichnungen näher erläutert. Dabei zeigen:
- Figur 1: eine perspektivische Ansicht einer beispielhaften elektromechanischen Bremsvorrichtung,
- Figur 2: eine Schnittansicht eines Teilbereichs einer ersten beispielhaften Bremsvorrichtung,
- Figur 3: eine Detailansicht der in Figur 2 verwendeten Druckhülsen,
- Figur 4: eine Schnittansicht eines Teilbereichs einer zweiten beispielhaften Bremsvorrichtung,
- Figur 5: zwei Detailansichten der in Figur 4 verwendeten Druckhülsen,
- Figur 6: Detailansichten zur Anordnung eines Drucksensors in den Druckhülsen der Figuren 4 und 5.

Im Folgenden werden einander ähnliche oder identische Merkmale mit denselben Bezugszeichen gekennzeichnet.

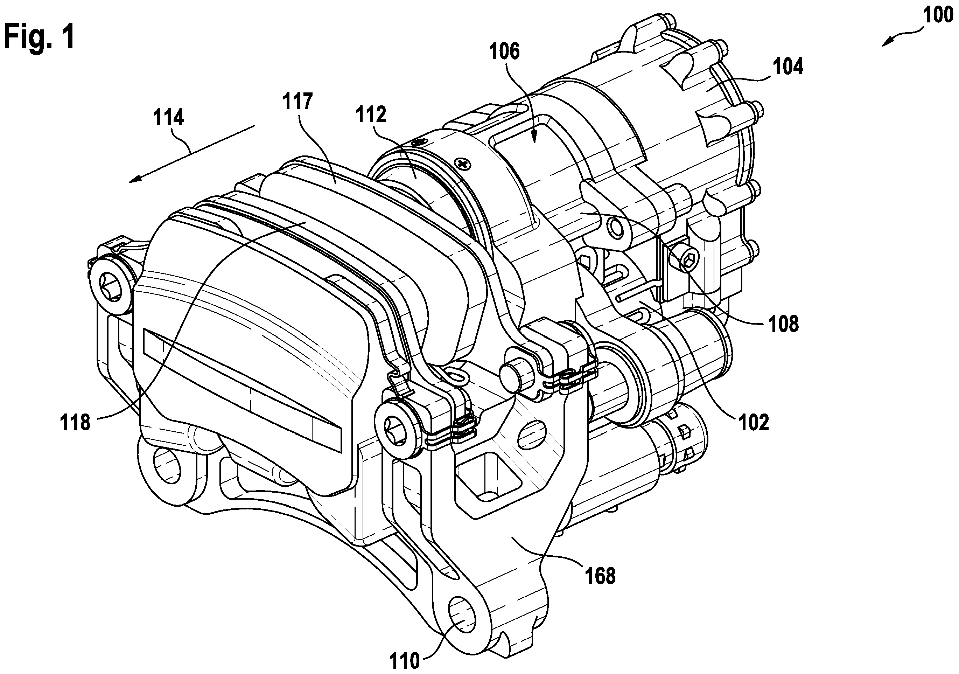

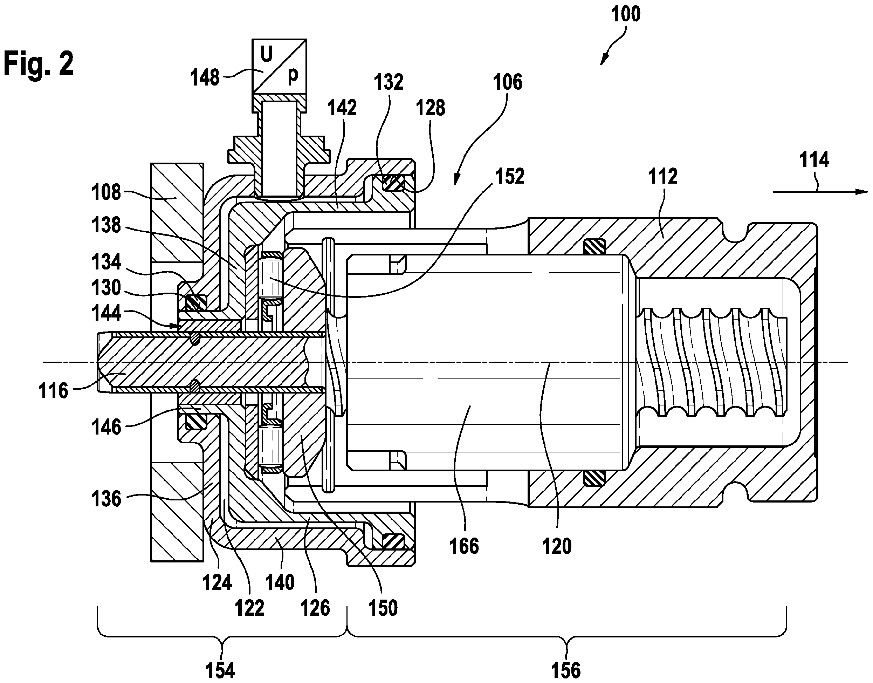

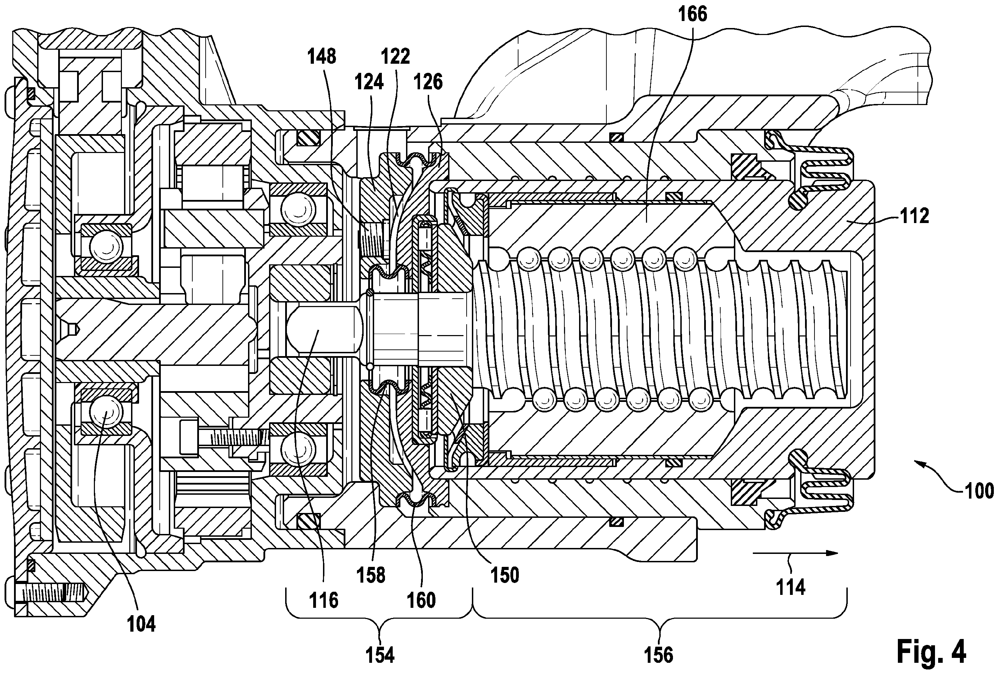

Die Figur 1 zeigt eine perspektivische Ansicht einer beispielhaften elektromechanischen Bremsvorrichtung 100, die in der hier dargestellten Ausgestaltung als Schwimmsattelbremse ausgeführt ist. Die Bremsvorrichtung 100 weist einen Elektromotor 102 auf, der über ein Getriebe 104 mit einer Spannvorrichtung 106 verbunden ist, die in der hier dargestellten Ausgestaltung als Rotations-Translations-Getriebe in Form eines Spindeltriebs ausgebildet ist. Dies wird im Folgenden mit Bezug auf die Figuren 2 und 4 noch näher erläutert.

Die Anordnung aus Elektromotor 102, Getriebe 104 und Spannvorrichtung 106 ist dabei an einem Bremssattel 108 angeordnet, der über eine schwimmende Lagerung in einem Bremssattelhalter 168 mit entsprechenden Befestigungspunkten 110 an der Radaufhängung eines Fahrzeugs befestigt werden kann. In dem Bremssattel 108 ist ein Druckkolben 112 so angeordnet, dass der Druckkolben 112 durch eine entsprechende Ansteuerung des Elektromotors 102 und einer hieraus resultierenden Betätigung der Spannvorrichtung 106 entlang einer Zuspannrichtung 114 bewegt werden kann.

Auf den Druckkolben 112 ist wiederum ein erster Reibbelag 116 angeordnet, der bei einer Bewegung des Druckkolbens 112 in Zuspannrichtung 114 in Richtung eines zweiten Reibbelags 118 bewegt wird. Ist die Bremsvorrichtung 100 an einem Fahrzeug montiert, ist zwischen den Reibbelägen 116 und 118 ferner eine mit dem Fahrzeugrad fest verbundene Bremsscheibe angeordnet, sodass bei ausreichender Verschiebung des ersten Reibbelags 116 in Zuspannrichtung der erste Reibbelag 116 in Kontakt mit der Bremsscheibe kommt. Wird dabei die Spannvorrichtung 106 weiter betätigt, wird der zweite Reibbelag 118 entgegen der Zuspannrichtung 114, also in Richtung einer zwischen den Reibbelägen 116 und 118 angeordneten Bremsscheibe bewegt, bis beide Reibbeläge 116 und 118 auf der Bremsscheibe aufliegen.

Ab diesem Punkt werden bei einer weiteren Betätigung der Spannvorrichtung 106 die Reibbeläge 116 und 118 auf die Bremsscheibe gepresst, sodass ein das Fahrzeug abbremsendes Verzögerungsmoment auf das Fahrzeugrad bewirkt wird. Zur Steuerung einer solchen elektromechanischen Bremsvorrichtung 100 zur Umsetzung einer definierten Bremsanforderung, ist es dabei erforderlich, genau zu ermitteln, mit welcher Kraft die Reibbeläge 116 und 118 auf die Bremsscheibe gepresst werden.

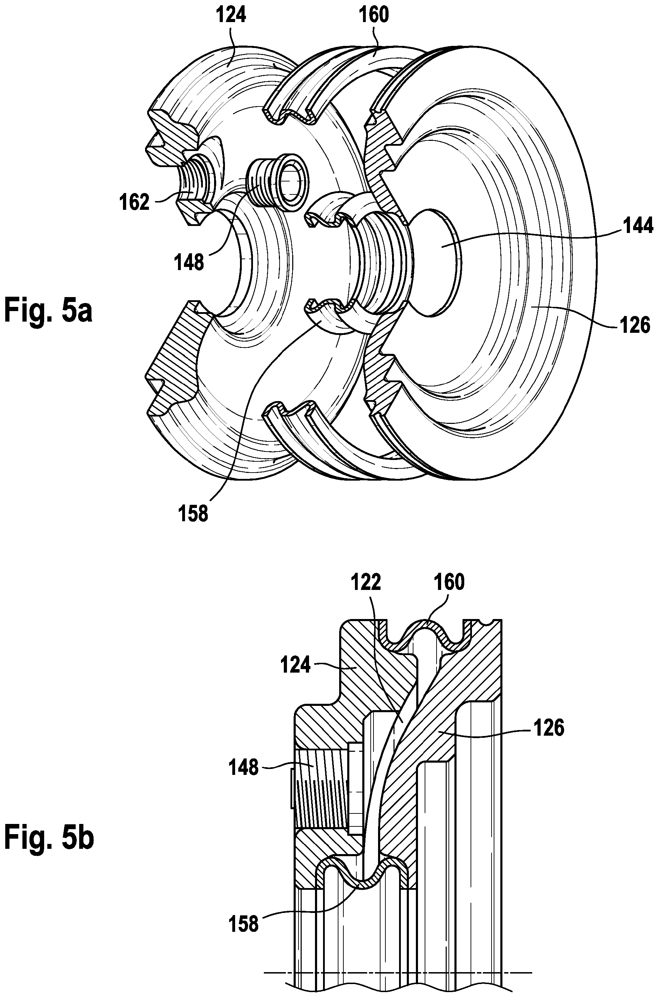

Erfindungsgemäß ist hierzu vorgesehen, dass die Bremsvorrichtung 100 wenigstens einen hydraulisch abgeschlossenen, fluidgefüllten Hohlraum aufweist, wobei sich die Spannvorrichtung 106 neben einer Abstützung an dem Druckkolben 112, andererseits über den fluidgefüllten Hohlraum mittelbar an dem Bremssattel 108 abstützt. Dabei ist ein Drucksensor mit dem fluidgefüllten Hohlraum hydraulisch verbunden und dazu ausgebildet, den Fluiddruck innerhalb des fluidgefüllten Hohlraums zu ermitteln. Im Folgenden werden beispielhaft zwei bevorzugte Ausgestaltung dieses Ansatzes mit Bezug auf die Figuren 2 und 5 näher erläutert.

Dabei zeigt die Figur 2 eine Schnittansicht eines Teilbereichs einer ersten Beispielhaften Bremsvorrichtung 100. Aus Gründen der Übersichtlichkeit sind dabei nur die für die Ausgestaltung des erfindungsgemäßen Ansatzes relevanten Elemente der Bremsvorrichtung 100 dargestellt.

Wie zuvor bereits ausgeführt wurde, weist die Bremsvorrichtung 100 eine Spannvorrichtung 106 auf, die dazu ausgebildet ist, den Druckkolben 112 mit einer Kraft entlang einer Zuspannrichtung 114 zu beaufschlagen. Hierzu weist die Spannvorrichtung 106 einen Spindeltrieb auf, der eine Gewindespindel 116 und eine auf der Gewindespindel 116 angeordnete Spindelmutter 166 auf. Die Gewindespindel 116 ist dabei, wie zuvor ausgeführt wurde, über ein nicht dargestelltes Getriebe 104 mit dem ebenfalls nicht dargestellten Elektromotor 102 so verbunden, dass die Gewindespindel 116 durch eine entsprechende Ansteuerung des Elektromotors 102 in Rotation um ihre Längsachse 120 versetzt werden kann. Die Spindelmutter 166 ist dabei teilweise innerhalb des Druckkolbens 112 angeordnet und stützt sich in Zuspannrichtung an dem Druckkolben 112 ab. Ferner ist die Spindelmutter 166 gegen ein Verdrehen um die Längsachse der Gewindespindel 116 gesichert, sodass eine Rotation der Gewindespindel 116 zu einer Verschiebung der Spindelmutter 166 und mithin des Druckkolbens 112 entlang der Zuspannrichtung 114 führt. Der Spindeltrieb ist dabei bevorzugt als reibungsarmer Kugelgewindetrieb ausgeführt.

Neben einer Abstützung der Spindelmutter 166 und mithin der Spannvorrichtung 106 in Zuspannrichtung 114 an dem Druckkolben 112, stützt sich die Spannvorrichtung 106 entgegen der Zuspannrichtung an einem fluidgefüllten Hohlraum 122 ab. Der fluidgefüllte Hohlraum 122 wird dabei in der dargestellten Ausgestaltung zwischen zwei topfförmigen Druckhülsen 124 und 126 gebildet. Dabei stützt sich eine erste der Druckhülsen 124 an dem Bremssattel 108 entgegen der Zuspannrichtung 114 ab. Die zweite Druckhülse 126 ist entlang der Zuspannrichtung 114 verschiebbar in der ersten Druckhülse 124 gelagert. Hierzu weisen die erste und die zweite Druckhülse 124 und 126 Lagerflächen 128 und 130 auf, auf denen die Druckhülsen 124 und 126 entlang der Zuspannrichtung 114 verschiebbar gleitgelagert sind.

Der zwischen den Druckhülsen 124 und 126 ausgebildete Hohlraum 122 ist dabei über als Dichtungsringe ausgebildete Dichtelemente 132 und 134 fluiddicht abgedichtet, wobei die Dichtelemente 132 und 134 jeweils in entsprechenden Nuten angeordnet sind, die in den Druckhülsen 124 und 126 ausgebildet sind. Die Dichtelemente 132 und 134 sind dabei im Bereich der Lagerflächen 128 und 130 der Druckhülsen 124 und 126 angeordnet und bilden zusammen mit den Lagerflächen 128 und 130 Gleitlager aus.

Die topfförmigen Druckhülsen 124 und 126 weisen in ihrer Geometrie jeweils eine Bodenfläche 136 und 138, sowie eine umlaufende Seitenwand 140 und 142 auf. Dabei ist in den Bodenflächen 136 und 138 der Druckhülsen 124 und 126 jeweils eine zentrierte Öffnung 144 ausgebildet, durch die sich die Gewindespindel 116 erstreckt. Dabei weist die zweite Druckhülse 126 im Bereich der Öffnung 144 eine sich entgegen der Zuspannrichtung 114 erstreckende Auskragung 146 auf, die in die Öffnung 144 der erste Druckhülse 124 hineinragt und auf deren radialer Außenseite die Lagerfläche 130 ausgebildet ist. Mit einem in einer Nut der ersten Druckhülse 124 angeordneten Dichtelement 134 wird so eines der Gleitlager ausgebildet. Das zweite Gleitlager ist in den Seitenwänden 140 und 142 an deren axialen Endbereichen in Zuspannrichtung 114 ausgebildet. Hierzu ist auf der Innenfläche der Seitenwand 140 der ersten Druckhülse 124 eine Lagerfläche ausgebildet, auf der ein Dichtelement 132 gleiten kann, das in einer Nut angeordnet ist, die in der Seitenwand 142 der zweiten Druckhülse 126 ausgebildet ist.

Ferner ist in der Seitenwand 140 der ersten Druckhülse 124 ein Drucksensor 148 angeordnet, der dazu ausgebildet ist, den in dem Hohlraum 122 herrschenden Fluiddruck zu messen. Der Hohlraum 122 ist dabei bevorzugt mit einer Hydraulikflüssigkeit befüllt. Die Darstellung eines einzelnen Elements als Drucksensor 148 ist dabei nicht beschränkend zu verstehen. Vielmehr können in der dargestellten Anordnung auch mehrere Drucksensoren 148 mit dem Hohlraum 122 hydraulisch verbunden sein, sodass eine Redundanz bei der Ermittlung des in dem Hohlraum 122 herrschenden Drucks geschaffen ist.

Wie zuvor bereits ausgeführt wurde, ist die Spindelmutter 166 relativ zum Bremssattel 108 drehfest und axial verschiebbar entlang Gewindespindel 116 auf der Gewindespindel 116 angeordnet, sodass bei einer Rotation der Gewindespindel 116 eine Verschiebung der Spindelmutter 166 und mithin des Druckkolbens 112 bewirkt wird. Bei einer Verschiebung der Spindelmutter 166 in Zuspannrichtung entsteht Reaktionskraft entgegen der Zuspannrichtung 114, die auf die Gewindespindel 116 einwirkt. Zur Abstützung dieser Kraft ist an der Gewindespindel 116 ein Stützring 150 angeordnet, der zur Aufnahme einer entgegen der Zuspannrichtung 114 wirkenden Kraft ausgebildet ist und sich an der zweiten Druckhülse 126 abstützt. Dabei ist zwischen dem Stützring 150 und der zweiten Druckhülse 126 ein Axiallager 152 zur Aufnahme der entstehenden Kräfte ausgebildet.

Zur Übertragung der in axialer Richtung auf die Gewindespindel 116 wirkenden Kräfte auf den Stützring 150, weist die Gewindespindel 116 zwei Längsabschnitte mit unterschiedlichem Durchmesser auf. Dabei ist der Durchmesser der Gewindespindel 116 in einem ersten Längsabschnitt 154 kleiner als in einem zweiten Längsabschnitt 156, wobei sich der erste Längsabschnitt 154 ab dem rückwärtigen, also dem Getriebe zugewandten Ende der Gewindespindel 116 erstreckt. **In** dem zweiten Längsabschnitt 156 ist dabei das Außengewinde der Gewindespindel 116 ausgebildet, wobei der Kerndurchmesser des Gewindes größer ist, als der Durchmesser der Gewindespindel 116 im ersten Längsabschnitt 154. Der Innendurchmesser des Stützrings 150 ist dabei kleiner als der Kerndurchmesser des zweiten Längsabschnitts 156, aber größer als der Durchmesser des ersten Längsabschnitts 154, sodass sich der Stützring 150 in Zuspannrichtung 114 an dem Übergang zwischen den Längsabschnitten 154 und 156 abstützt.

Wird bei dieser Anordnung durch eine entsprechende Ansteuerung des Elektromotors 102 eine Kraft auf die Spindelmutter 166 und mithin auf den Druckkolben 112 bewirkt, wird ebendiese Kraft gleichermaßen auch auf die zweite Druckhülse 126 übertragen. Infolgedessen wird der Hohlraum 122 bzw. das darin befindliche Fluid unter Druck gesetzt. Der so entstehende Druck wird wiederum durch den Drucksensor 148 erfasst, sodass aus dem ermittelten Druck die aktuell auf den Druckkolben 112 und mithin auf einen an dem Druckkolben 112 angeordneten Reibbelag 116 wirkende Zuspannkraft ermittelt werden kann.

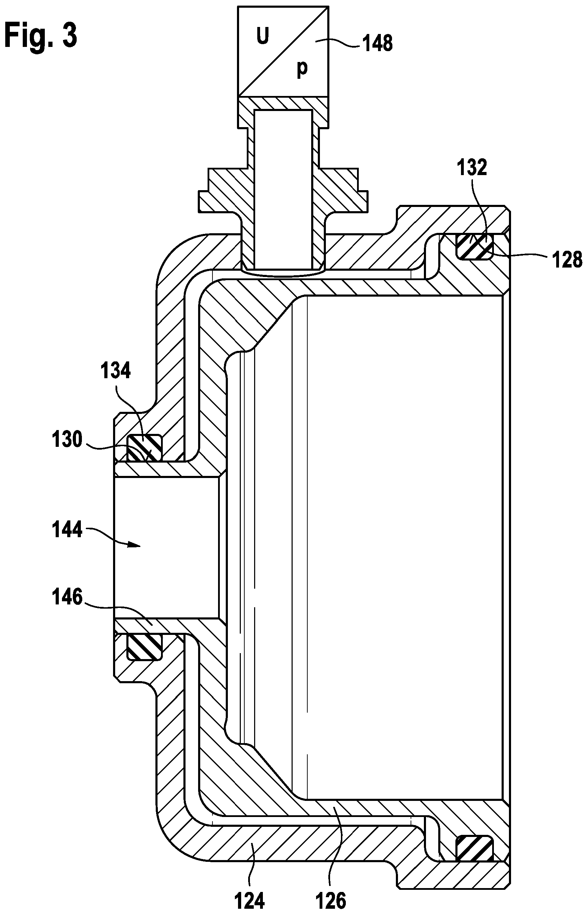

Die Figur 3 zeigt nochmals die Anordnung der beiden Druckhülsen 124 und 126 ohne die darin angeordnete Spannvorrichtung.

Die Figur 4 zeigt eine Schnittansicht einer zweiten Ausgestaltung einer Bremsvorrichtung 100 im Sinne der vorliegenden Erfindung. Die hier dargestellte Bremsvorrichtung 100 unterscheidet sich von der zuvor mit Bezug auf die Figuren 2 und 3 beschriebenen Bremsvorrichtung 100 im Wesentlichen durch eine andere Ausgestaltung der Druckhülsen 124 und 126. So sind in dieser Ausgestaltung die Druckhülsen 124 und 126 tellerförmig ausgebildet, wobei sich die erste Druckhülse 124 wiederum an dem Bremssattel abstützt. Die zweite Druckhülse 126 ist auf dem ersten Längsabschnitt 154 der Gewindespindel 116 entlang der Betätigungsrichtung 114 verschiebbar gelagert. Auch hier stützt sich die Gewindespindel 116 wiederum über einen Stützring 150 entgegen der Zuspannrichtung 114 an der zweiten Druckhülse 126 ab, sodass eine auf den Druckkolben 112 wirkende Kraft auf die zweite Druckhülse 126 übertragen wird.

Auch in dieser Ausgestaltung wird dabei ein zwischen den Druckhülsen 124 und 126 ausgebildeter, fluiddicht abgeschlossener Hohlraum 122 so mit einer Kraft beaufschlagt, dass sich die Kraft in einer entsprechenden Änderung des in dem Hohlraum 122 herrschenden Drucks wiederspiegelt. Der Hohlraum 122 ist dabei, anders als in der zuvor beschriebenen Ausgestaltung, durch die Druckhülsen 124 und 126 einerseits und durch an den Rändern der Druckhülsen angeordnete Membrane 158 und 160 begrenzt. Dies ist in der Figur 5 nochmals im Detail dargestellt.

Dabei weisen auch in dieser Ausgestaltung die Druckhülsen 124 und 126 jeweils zentrierte Öffnungen 144 auf, durch die sich die Gewindespindel 116 erstreckt. Die als Faltenbälge ausgebildeten Membrane 158 und 160 sind dabei an den radialen Außenkanten der Tellerform der Druckhülsen, sowie an den Rändern der zentrierten Öffnung 144 angeordnet. Die Membrane 158 und 160 sind dabei ferner bevorzugt so ausgebildet, dass sie zwar eine Bewegung der zweiten Druckhülse 126 in Richtung der ersten Druckhülse 124 in engen Grenzen erlauben, sich jedoch bei starken Druckänderungen innerhalb des Hohlraums 122 nicht radial nach außen bzw. innen ausbeulen, sodass eine auf den Hohlraum 122 wirkende Kraft vollständig als Druckänderung in dem Hohlraum 122 abgebildet wird.

Der Drucksensor 148 zur Erfassung des in dem Hohlraum 122 herrschenden Drucks ist dabei innerhalb der Tellerfläche der ersten Druckhülse 124 zwischen den Membranen 158 und 160 angeordnet. Der Drucksensor 148 kann dabei insbesondere in eine entsprechende Ausnehmung 162 eingeschraubt sein, sodass er beispielsweise bei einem Defekt leicht ausgetauscht werden kann.

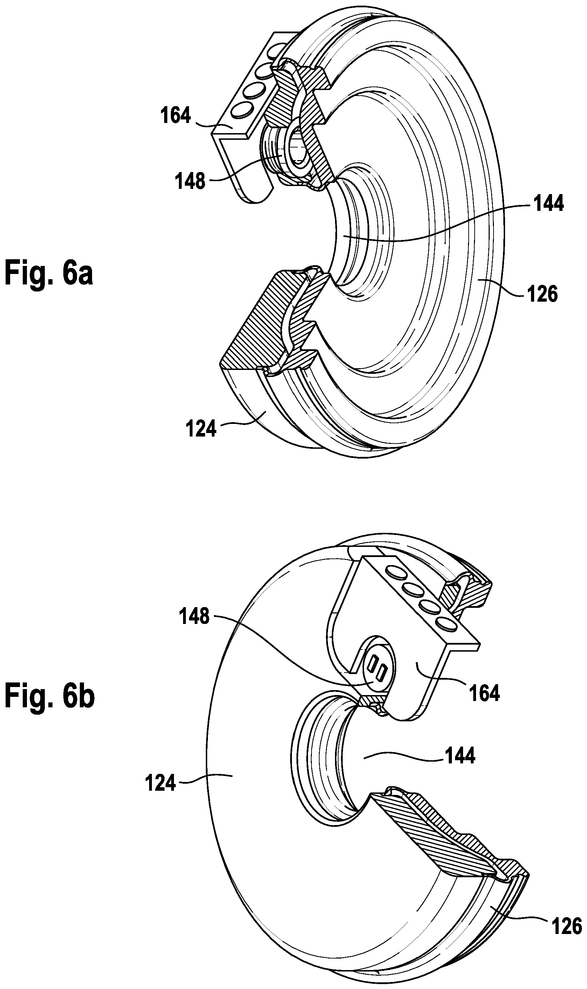

Schließlich zeigt die Figur 6 zwei weitere perspektivische Darstellungen der Anordnung aus erster und zweiter Druckhülse 124 und 126 mit darin angeordnetem Drucksensor 148. Dabei ist in der Figur 6 ferner die Schnittstelle 164 des Drucksensors 148 dargestellt, über die eine ermittelte Druckinformation an einen Regler der Bremsvorrichtung 100 übermittelt werden kann.

## Patentansprüche

1. Elektromechanische Bremsvorrichtung (100) mit einem Bremssattel (108) und einem in dem Bremssattel (108) entlang einer Zuspannrichtung (114) beweglich gelagerten Druckkolben (112), wobei die Bremsvorrichtung (100) eine elektromechanische Spannvorrichtung (106) aufweist, wobei sich die Spannvorrichtung (106) einerseits an dem Druckkolben (112) abstützt und dazu ausgebildet ist, den Druckkolben (112) mit einer entlang der Zuspannrichtung (114) wirkenden Kraft zu beaufschlagen,
**dadurch gekennzeichnet, dass**
die Bremsvorrichtung (100) wenigstens einen hydraulisch abgeschlossenen, fluidgefüllten Hohlraum (122) aufweist, wobei sich die Spannvorrichtung (106) andererseits über den fluidgefüllten Hohlraum (122) mittelbar an dem Bremssattel (108) abstützt und wobei ein Drucksensor (148) mit dem fluidgefüllten Hohlraum (122) hydraulisch verbunden und dazu ausgebildet ist, den Fluiddruck innerhalb des fluidgefüllten Hohlraums (122) zu ermitteln.

2. Elektromechanische Bremsvorrichtung (100) nach Anspruch 1, **dadurch gekennzeichnet, dass** die Spannvorrichtung (106) eine elektromotorisch angetriebene Gewindespindel (116) und eine Spindelmutter (166) aufweist, wobei sich die Spindelmutter (166) in Zuspannrichtung (114) an dem Druckkolben (112) abstützt und wobei sich die Gewindespindel (116) über den fluidgefüllten Hohlraum (122) entgegen der Zuspannrichtung (114) an dem Bremssattel (108) abstützt.

3. Elektromechanische Bremsvorrichtung (100) nach Anspruch 2, **dadurch gekennzeichnet, dass** die Spindelmutter (166) zumindest teilweise in einer Ausnehmung innerhalb des Druckkolbens (112) angeordnet ist.

4. Elektromechanische Bremsvorrichtung (100) nach Anspruch 2 oder 3, **dadurch gekennzeichnet, dass** die Gewindespindel (116) einen ersten Längsabschnitt (154) mit einem ersten Durchmesser aufweist und einen an den ersten Längsabschnitt (154) angrenzenden zweiten Längsabschnitt (156) aufweist, wobei in dem zweiten Längsabschnitt (156) ein Außengewinde ausgebildet ist, dessen Durchmesser größer als der erste Durchmesser ist.

5. Elektromechanische Bremsvorrichtung (100) nach Anspruch 4, **dadurch gekennzeichnet, dass** auf dem ersten Längsabschnitt (154) der Gewindespindel (116) ein Stützring (150) angeordnet ist, wobei der Innendurchmesser des Stützrings (150) kleiner als der Außendurchmesser des zweiten Längsabschnitts (156) der Gewindespindel (116) ist, sodass sich die Gewindespindel (116) über den Stützring (150) entgegen der Zuspannrichtung (114) über den fluidgefüllten Hohlraum (122) mittelbar an dem Bremssattel (108) abstützt.

6. Elektromechanische Bremsvorrichtung (100) nach einem der vorherigen Ansprüche, **dadurch gekennzeichnet, dass** der fluidgefüllte Hohlraum (122) zwischen einer ersten (124) und einer zweiten Druckhülse (126) ausgebildet ist, wobei sich die erste Druckhülse (124) entgegen der Zuspannrichtung (114) an dem Bremssattel (108) abstützt, während sich die zweite Drückhülse (126) in Zuspannrichtung (114) an der Spannvorrichtung (106) abstützt.

7. Elektromechanische Bremsvorrichtung (100) nach Anspruch 6, **dadurch gekennzeichnet, dass** die erste Druckhülse (124) an dem Bremssattel (108) befestigt ist.

8. Elektromechanische Bremsvorrichtung (100) nach einem der Ansprüche 6 oder 7, **dadurch gekennzeichnet, dass** die erste Druckhülse (124) und die zweite Druckhülse (126) jeweils eine Öffnung (144) aufweisen, wobei sich die Spannvorrichtung (106) durch die Öffnung (144) erstreckt.

9. Elektromechanische Bremsvorrichtung (100) nach einem der Ansprüche 6 bis 8, **dadurch gekennzeichnet** die zweite Druckhülse (126) entlang der Zuspannrichtung (114) verschiebbar in der ersten Druckhülse (124) gelagert ist.

10. Elektromechanische Bremsvorrichtung (100) nach Anspruch 9, **dadurch gekennzeichnet, dass** die zweite Druckhülse (126) auf wenigstens zwei Lagerflächen (128, 130) an der ersten Druckhülse (124) gleitgelagert ist, wobei im Bereich der Lagerflächen (128, 130) an der ersten Druckhülse (124) und/oder der zweiten Druckhülse (126) Dichtelemente (132, 134) angeordnet sind, die den zwischen den Druckhülsen (124, 126) ausgebildeten Hohlraum (122) fluiddicht abdichten.

11. Elektromechanische Bremsvorrichtung (100) nach einem der Ansprüche 6 bis 10, **dadurch gekennzeichnet, dass** die erste (124) und die zweite Druckhülse (126) jeweils topfförmig ausgebildet sind, wobei die Spannvorrichtung (106) zumindest abschnittsweise innerhalb der Topfform angeordnet ist.

12. Elektromechanische Bremsvorrichtung (100) nach Anspruch 11, **dadurch gekennzeichnet, dass** der Drucksensor (148) in einer Seitenwand (140) der Topfform der ersten Druckhülse (124) angeordnet ist.

13. Elektromechanische Bremsvorrichtung (100) nach einem der Ansprüche 6 bis 8, **dadurch gekennzeichnet, dass** die erste Druckhülse (124) und die zweite Druckhülse (126) jeweils tellerförmig ausgebildet sind, wobei die Druckhülsen (124, 126) an ihren radialen Außenrändern und an den Rändern ihrer jeweiligen Öffnungen (144) über Membranen (158, 160) miteinander verbunden sind, sodass der zwischen den Druckhülsen (124, 126) ausgebildete Hohlraum (122) durch die Membranen (158, 160) fluiddicht abgeschlossen ist.

14. Elektromechanische Bremsvorrichtung (100) nach Anspruch 13, **dadurch gekennzeichnet, dass** der Drucksensor (148) in der Tellerform der ersten Druckhülse (124) zwischen den Membranen (158, 160) angeordnet ist.

15. Elektromechanische Bremsvorrichtung (100) nach einem der Ansprüche 6 bis 14, **dadurch gekennzeichnet, dass** der Drucksensor (148) in die erste Druckhülse (124) eingeschraubt ist.

## Claims

1. Electromechanical brake device (100) with a brake calliper (108) and a pressure piston (112) mounted in the brake calliper (108) such that it can move along an applying direction (114), wherein the brake device (100) has an electromechanical tensioning device (106), wherein the tensioning device (106) is supported, on one side, on the pressure piston (112) and is designed to apply to the pressure piston (112) a force acting in the applying direction (114),
**characterized in that**
the brake device (100) has at least one hydraulically sealed, fluid-filled cavity (122), wherein the tensioning device (106) is supported, on the other side, indirectly on the brake calliper (108) via the fluid-filled cavity (122), and wherein a pressure sensor (148) is hydraulically connected to the fluid-filled cavity (122) and is designed to determine the fluid pressure inside the fluid-filled cavity (122).

2. Electromechanical brake device (100) according to Claim 1, **characterized in that** the tensioning device (106) has an electromotively driven threaded spindle (116) and a spindle nut (166), wherein the spindle nut (166) is supported on the pressure piston (112) in the applying direction (114), and wherein the threaded spindle (116) is supported on the brake calliper (108) counter to the applying direction (114) via the fluid-filled cavity (122).

3. Electromechanical brake device (100) according to Claim 2, **characterized in that** the spindle nut (166) is arranged at least partially in a recess inside the pressure piston (112).

4. Electromechanical brake device (100) according to Claim 2 or 3, **characterized in that** the threaded spindle (116) has a first longitudinal portion (154) with a first diameter and a second longitudinal portion (156) adjoining the first longitudinal portion (154), wherein an external thread with a diameter greater than the first diameter is formed in the second longitudinal portion (156).

5. Electromechanical brake device (100) according to Claim 4, **characterized in that** a support ring (150) is arranged on the first longitudinal portion (154) of the threaded spindle (116), wherein the internal diameter of the support ring (150) is smaller than the external diameter of the second longitudinal portion (156) of the threaded spindle (116), with the result that the threaded spindle (116) is supported indirectly on the brake calliper (108) via the support ring (150) counter to the applying direction (114) via the fluid-filled cavity (122).

6. Electromechanical brake device (100) according to one of the preceding claims, **characterized in that** the fluid-filled cavity (122) is formed between a first (124) and a second pressure sleeve (126), wherein the first pressure sleeve (124) is supported on the brake calliper (108) counter to the applying direction (114), whilst the second pressure sleeve (126) is supported on the tensioning device (106) in the applying direction (114).

7. Electromechanical brake device (100) according to Claim 6, **characterized in that** the first pressure sleeve (124) is fastened on the brake calliper (108).

8. Electromechanical brake device (100) according to either of Claims 6 or 7, **characterized in that** the first pressure sleeve (124) and the second pressure sleeve (126) each have an opening (144), wherein the tensioning device (106) extends through the opening (144).

9. Electromechanical brake device (100) according to one of Claims 6 to 8, **characterized in that** the second pressure sleeve (126) is mounted in the first pressure sleeve (124) such that it is displaceable along the applying direction (114).

10. Electromechanical brake device (100) according to Claim 9, **characterized in that** the second pressure sleeve (126) is mounted on plain bearings on the first pressure sleeve (124) on at least two bearing surfaces (128, 130), wherein sealing elements (132, 134) which seal the cavity (122) formed between the pressure sleeves (124, 126) in a fluid-tight manner are arranged in the region of the bearing surfaces (128, 130) on the first pressure sleeve (124) and/or the second pressure sleeve (126).

11. Electromechanical brake device (100) according to one of Claims 6 to 10, **characterized in that** the first pressure sleeve (124) and the second pressure sleeve (126) each have a pot-shaped design, wherein at least part of the tensioning device (106) is arranged within the pot shape.

12. Electromechanical brake device (100) according to Claim 11, **characterized in that** the pressure sensor (148) is arranged in a side wall (140) of the pot shape of the first pressure sleeve (124).

13. Electromechanical brake device (100) according to one of Claims 6 to 8, **characterized in that** the first pressure sleeve (124) and the second pressure sleeve (126) each have a plate-shaped design, wherein the pressure sleeves (124, 126) are connected to each other via membranes (158, 160) at their radial outer rims and at the rims of their respective openings (144), with the result that the cavity (122) formed between the pressure sleeves (124, 126) is sealed in a fluid-tight manner by the membranes (158, 160).

14. Electromechanical brake device (100) according to Claim 13, **characterized in that** the pressure sensor (148) is arranged in the plate shape of the first pressure sleeve (124) between the membranes (158, 160).

15. Electromechanical brake device (100) according to one of Claims 6 to 14, **characterized in that** the pressure sensor (148) is screwed into the first pressure sleeve (124).

## Revendications

1. Dispositif de freinage électromécanique (100) avec un étrier de frein (108) et un piston de pression (112) monté dans l'étrier de frein (108) de manière mobile le long d'une direction de serrage (114), le dispositif de freinage (100) présentant un dispositif de serrage électromécanique (106), le dispositif de serrage (106) s'appuyant d'une part sur le piston de pression (112) et étant réalisé pour solliciter le piston de pression (112) avec une force agissant le long de la direction de serrage (114),
**caractérisé en ce que**
le dispositif de freinage (100) présente au moins une cavité (122) fermée hydrauliquement, remplie de fluide, le dispositif de serrage (106) s'appuyant d'autre part indirectement sur l'étrier de frein (108) par l'intermédiaire de la cavité (122) remplie de fluide, et un capteur de pression (148) étant relié hydrauliquement à la cavité (122) remplie de fluide et étant réalisé pour déterminer la pression du fluide à l'intérieur de la cavité (122) remplie de fluide.

2. Dispositif de freinage électromécanique (100) selon la revendication 1, **caractérisé en ce que** le dispositif de serrage (106) présente une broche filetée (116) entraînée par un moteur électrique et un écrou de broche (166), l'écrou de broche (166) s'appuyant sur le piston de pression (112) dans la direction de serrage (114) et la broche filetée (116) s'appuyant sur l'étrier de frein (108) par l'intermédiaire de la cavité (122) remplie de fluide à l'encontre de la direction de serrage (114).

3. Dispositif de freinage électromécanique (100) selon la revendication 2, **caractérisé en ce que** l'écrou de broche (166) est au moins partiellement agencé dans un évidement à l'intérieur du piston de pression (112).

4. Dispositif de freinage électromécanique (100) selon la revendication 2 ou 3, **caractérisé en ce que** la broche filetée (116) présente une première section longitudinale (154) ayant un premier diamètre et une deuxième section longitudinale (156) adjacente à la première section longitudinale (154), un filetage extérieur étant réalisé dans la deuxième section longitudinale (156), le diamètre de ce filetage étant supérieur au premier diamètre.

5. Dispositif de freinage électromécanique (100) selon la revendication 4, **caractérisé en ce qu'**une bague d'appui (150) est agencée sur la première section longitudinale (154) de la broche filetée (116), le diamètre intérieur de la bague d'appui (150) étant inférieur au diamètre extérieur de la deuxième section longitudinale (156) de la broche filetée (116), de telle sorte que la broche filetée (116) s'appuie indirectement sur l'étrier de frein (108) par l'intermédiaire de la bague d'appui (150), à l'encontre de la direction de serrage (114), par l'intermédiaire de la cavité (122) remplie de fluide.

6. Dispositif de freinage électromécanique (100) selon l'une quelconque des revendications précédentes, **caractérisé en ce que** la cavité (122) remplie de fluide est réalisée entre un premier (124) et un deuxième manchon de pression (126), le premier manchon de pression (124) s'appuyant sur l'étrier de frein (108) à l'encontre de la direction de serrage (114), tandis que le deuxième manchon de pression (126) s'appuie sur le dispositif de serrage (106) dans la direction de serrage (114).

7. Dispositif de freinage électromécanique (100) selon la revendication 6, **caractérisé en ce que** le premier manchon de pression (124) est fixé à l'étrier de frein (108).

8. Dispositif de freinage électromécanique (100) selon l'une quelconque des revendications 6 ou 7, **caractérisé en ce que** le premier manchon de pression (124) et le deuxième manchon de pression (126) présentent chacun une ouverture (144), le dispositif de serrage (106) s'étendant à travers l'ouverture (144).

9. Dispositif de freinage électromécanique (100) selon l'une quelconque des revendications 6 à 8, **caractérisé en ce que** le deuxième manchon de pression (126) est monté coulissant dans le premier manchon de pression (124) le long de la direction de serrage (114).

10. Dispositif de freinage électromécanique (100) selon la revendication 9, **caractérisé en ce que** le deuxième manchon de pression (126) est monté à coulissement sur au moins deux surfaces de montage (128, 130) sur le premier manchon de pression (124), des éléments d'étanchéité (132, 134) étant agencés dans la zone des surfaces de montage (128, 130) sur le premier manchon de pression (124) et/ou le deuxième manchon de pression (126), lesquels assurent l'étanchéité aux fluides de la cavité (122) réalisée entre les manchons de pression (124, 126).

11. Dispositif de freinage électromécanique (100) selon l'une quelconque des revendications 6 à 10, **caractérisé en ce que** le premier (124) et le deuxième (126) manchons de pression sont chacun réalisés sous forme de pot, le dispositif de serrage (106) étant agencé au moins par sections à l'intérieur de la forme de pot.

12. Dispositif de freinage électromécanique (100) selon la revendication 11, **caractérisé en ce que** le capteur de pression (148) est agencé dans une paroi latérale (140) de la forme de pot du premier manchon de pression (124).

13. Dispositif de freinage électromécanique (100) selon l'une quelconque des revendications 6 à 8, **caractérisé en ce que** le premier manchon de pression (124) et le deuxième manchon de pression (126) sont chacun en forme d'assiette, les manchons de pression (124, 126) étant reliés entre eux par l'intermédiaire de membranes (158, 160) sur leurs bords extérieurs radiaux et sur les bords de leurs ouvertures respectives (144), de telle sorte que la cavité (122) réalisée entre les manchons de pression (124, 126) est fermée de manière étanche aux fluides par les membranes (158, 160).

14. Dispositif de freinage électromécanique (100) selon la revendication 13, **caractérisé en ce que** le capteur de pression (148) est agencé dans la forme d'assiette du premier manchon de pression (124) entre les membranes (158, 160).

15. Dispositif de freinage électromécanique (100) selon l'une quelconque des revendications 6 à 14, **caractérisé en ce que** le capteur de pression (148) est vissé dans le premier manchon de pression (124).
